# EUROPEAN PATENT APPLICATION

(11) **EP 4 382 363 A1**
(43) Date of publication of application: **12.06.2024**
(21) Application number: 22852377.5
(22) Date of filing: 30.08.2022
(51) Int. Cl.: B60R 1/00, H04N 23/13, G06V 10/26

(54) **DISPLAY SYSTEM AND METHOD FOR COMPENSATING BLIND AREA OF FIELD OF VIEW IN REARVIEW MIRROR OF TRACTOR-TRAILER**

(30) Priority: 06.08.2021 CN 202110901387; 27.01.2022 CN 202210100871
(71) Applicant: Shanghai Yuxing Electronics Technology Co., Ltd, Shanghai 201702 (CN)
(72) Inventor: FU, Bingkai, Shanghai 201702 (CN)
(74) Representative: Franke, Dirk
(86) International application number: PCT/CN2022/115731
(87) International publication number: WO 2023/011667

(57) **Abstract**

Disclosed is a display system for compensating a blind area of a field of view in a rearview mirror of a tractor-trailer. The system includes an acquisition apparatus, a sensing apparatus, a display control apparatus, and a display apparatus. The acquisition apparatus includes a left front camera, a right front camera, a left rear camera, and a right rear camera. The sensing apparatus is an angle sensing sensor arranged on a tractor-trailer, and the angle sensing sensor is used to obtain the angle by which the axis of a trailer deviates from the axis of a vehicle head. The display control apparatus is connected to the acquisition apparatus and the sensing apparatus. The display apparatus is a display arranged in a cab and is used for displaying to the driver an image output by the display control apparatus. By means of the multi-camera configuration, during turning, picture compensation is performed on an area in the rearview mirror that is blocked by the trailer, thereby effectively solving the problem of the trailer blocking field of view for observing. Compared with an ordinary panoramic image spliced when use a fish-eye lens, a driver can more intuitively perceive the position at which a risk factor is located, thereby reducing thinking time and reducing accidents.

## Description

### Related Application

The present application claims the priority of the Chinese invention application No. 202110901387.8, titled "DISPLAY SYSTEM AND METHOD FOR COMPENSATING BLIND AREA OF FIELD OF VIEW IN REARVIEW MIRROR OF TRACTOR-TRAILER" and the priority of the Chinese invention application No. 202210100871.5, titled "METHOD AND APPARATUS FOR AUTOMATICALLY ADJUSTING EXPOSURE".

### Field of the Invention

The present invention relates to a technical field of on-board electronic apparatus, and in particular relates to a display system and method for compensating a blind area of a field of view in a rearview mirror of a tractor-trailer.

### Background

A rearview mirror and an electronic rearview mirror are significant factors to ensure the driving safety when a vehicle is traveling. The performance standard GB-15084 of the rearview mirror for motor vehicles specifies that the observation range of the rearview mirror for motor vehicles is the field of view in a normal stopping state of the vehicle. The observation range of the both sides of the rearview mirror shall extend to 25-45 degrees out of a central axis of the vehicle (which is caused by different observation eye points), but the observation range of the field of view in some specific environment of the vehicle is not specified therein.

A traction vehicle or a winch vehicle implemented includes a vehicle head and a trailer, which are axially locked together or connected through hinge joint. When such vehicle reverses or turns, the driver needs to observe the images on both sides and directly behind the trailer to assist itself to smoothly move the vehicle according to a pre-set position or a pre-set trajectory. However, when a deviation angle of the vehicle head is too large, the rearview mirror or the electronic rearview mirror on one side may be blocked by the trailer due to a turning angle, and the driver can only observe the state of one side of the vehicle, whichwould easily cause accidents in a complex and unfamiliar environment, for example, a single-side inner wheel difference accident and a tail drift accident.

In the prior art, for example, a patent with the application No. 201811278439.5, in which it acquires image information by fish-eye cameras provided at a plurality of places of a vehicle body, pre-processes and splices the image information, and presents the spliced image by a display screen to a driver so that the driver acquires a 360-degree field of view of the vehicle; the 360-degree field of view is spliced into a surround field of view by means of 4-6 cameras, and the cameras must be fixed at a certain position and cannot be turned and shifted, which is suitable for low-speed use of passenger cars or integrated trucks. As for the tractor-trailer, since the trailer will move at any time, it is impossible to splice a complete image to implement the surround view because of the change of video acquisition range.

A surround view camera would result in great distortion of a fish-eye image. Since it is an auxiliary driving product, and there are no regulatory requirements for depth of field, object distance, etc. and it can only be used as an auxiliary product.

The surround view camera is mounted to shoot from a downward-looking perspective, due to the shooting angle of the camera, only the area near the periphery of the vehicle, but not the field of view far away from the vehicle, can be seen.

The present invention is used as a mandatory regulatory product to replace rearview mirrors, and clear scope of observation is required by the regulation. In addition, the performance test, operating conditions, field of view required by laws and regulations and safety requirements of camera are not equivalent products as compared with rearview mirrors.

### Summary

It is an objective of the present invention to provide a display system and method for compensating a blind area of a field of view in a rearview mirror of a tractor-trailer, so as to solve the problems of displaying a blind area position of unilateral compartment blocking caused by vehicle head shifting when the vehicle is turning and reversing, and to facilitate the driver to quickly locate the position where may occur dangerous in the blind area, and in a preferred embodiment, the present invention further improves its performance by adding, a shaft shift setting manner and a camera shooting adjustment manner based on sensitization, to the camera of an acquisition apparatus.

Specifically, the present application provides a display system for compensating a blind area of a field of view in a rearview mirror of a tractor-trailer, wherein the display system includes an acquisition apparatus, a sensing apparatus, a display control apparatus, and a display apparatus;
the acquisition apparatus includes a left front camera, a right front camera, a left rear camera, and a right rear camera; the left front camera and the right front camera are respectively arranged on the left side and right side out of a cab of a tractor, and the left rear camera and the right rear camera are respectively arranged on the left side and right side of a trailer;
the sensing apparatus is an angle sensing sensor arranged on the tractor-trailer, and the angle sensing sensor is used for acquiring an angle by which the axis of a trailer deviates from the axis of a vehicle head;
the display control apparatus is connected to the acquisition apparatus and the sensing apparatus, and includes a processor, wherein the processor is used for acquiring the angle by which the axis of a trailer deviates from the axis of a vehicle head via the sensing apparatus, and directly transmitting the pictures acquired by the acquisition apparatus to the display apparatus and/or transmitting pictures to the display apparatus after such pictures are processed by clipping and synthetizing;
the display apparatus is a display(s) arranged in the cab, and the display apparatus is connected to the display control apparatus to display to the driver an image output by the display control apparatus.

Further, the field of views of the pictures acquired by the left front camera and the right front camera comply with the Class II and/or Class IV fields of views ruled by Standard; and the pictures acquired by the left rear camera, the right rear camera, the left front camera and the right front camera include image of trailer body on a side where the cameras are located.

Further, the display apparatus includes a left display unit and a right display unit; the left display unit is used for displaying pictures acquired by the left front camera or pictures synthesized from pictures acquired by the left front camera and the left rear camera; the right display unit is used for displaying pictures acquired by the right front camera or pictures synthesized from pictures acquired by the right front camera and the right rear camera.

Further, the processor, when clipping and synthesizing pictures, removes pictures with a pre-set width or a fixed width on a trailer blocking side which pictures acquired by the front camera on a side that the vehicle head is turning opposite to or towards,reserves the pictures with a pre-set width or a fixed width on a trailer side which pictures acquired by the rear camera on a side that vehicle head is turning opposite to or towards, and places the reserved pictures at positions where the pictures are removed for synthesizing new pictures;
further, when the angle sensing sensor detects that the angle between the central axis of the vehicle head and the central axis of the trailer exceeds an shooting angle of the front camera on a turning side (a side the vehicle head turning towards), the processor uses the pictures with fixed width for clipping and synthesizing;
the fixed width is a width taken up by the trailer in the picture of the front camera on the turning side.

Further, the display control apparatus comprises a storage unit storing a pre-drawn display block diagram X for displaying on the display apparatus, a set of compensation block diagrams Y and a set of compensation block diagrams Z for picture compensation; the processor performs calculation and determination according to the sensing of the sensing apparatus, and retrieves a compensation block diagram Yₐ complying with a pre-set width from the set of pre-stored compensation block diagrams Y and a compensation block diagram Zₐ with a fixed width or a pre-set width from the set of compensation block diagrams Z;
meanwhile, the processor clips pictures acquired by the rear camera at a side opposite to the turning direction, by a pre-set width on the trailer side, and projects the processed pictures into the retrieved compensation block diagram Ya;
the processor clips pictures acquired by the rear camera at a side in the turning direction , by a fixed width on the trailer side, and projects the processed picture into the retrieved compensation block diagram Zₐ.

Further, the pre-set width is set according to an angle between a central axis of vehicle head and a central axis of the trailer;
when the angle between the central axis of the vehicle head and the central axis of the trailer is 0-15 degrees, the pre-set width is 0;
when the angle between the central axis of the vehicle head and the central axis of the trailer is 15-30 degrees, the pre-set width is 1/3 of the width of the picture;
when the angle between the central axis of the vehicle head and the central axis of the trailer is 30-45 degrees, the pre-set width is 2/3 of the width of the picture;
when the angle between the central axis of the vehicle head and the central axis of the trailer is greater than or equal to 45 degrees, and the pre-set width is a full picture width.

Preferably, one or more of the front left camera, the front right camera, the rear left camera and the rear right camera adopt tilt-shift cameras, the tilt-shift camera including a camera body, an image acquisition unit and an imaging lens, wherein the tilt-shift cameras comprise a camera body, an image acquisition unit and an imaging lens; the imaging lens and the image acquisition unit are respectively mounted at a front end and a rear end of the camera body, and the camera body has a first angle θ inclined toward a first direction with respect to a reference direction, the image acquisition unit and the imaging lens respectively have a second angle α and a third angle β inclined with respect to a main axis of the camera body in a direction opposite to an inclination direction of the camera body, the second angle α and the third angle β are different from each other, preferably, the second angle α is larger than the third angle β so that a plane where the image acquisition unit is located and a plane where the imaging len is located intersect with each other and form an acute angle.

The present application further provides a display method for compensating a blind area of a field of view in a rearview mirror of a tractor-trailer, the display method including the steps of:
step 1: obtaining, by a processor, video pictures acquired by a plurality of cameras in real time;
step 2: acquiring, by the processor, a working state of a tractor-trailer;
step 3: generating, by the processor, a picture with an optimal unblocked and minimum blind area scheme according to the working state of the tractor-trailer;
the working state includes a trailer state and a driving state; the trailer state includes a trailer mode and a no-trailer mode; and the driving state includes straight driving, turning and reversing;
the plurality of cameras includes a left front camera, a right front camera, a left rear camera and a right rear camera; the left front camera and the right front camera are respectively arranged on the left and right sides outside the cab, and the left rear camera and the right rear camera are respectively arranged on the left and right sides of the trailer.

Further, in step 3, in the no-trailer mode, the processor provides the display apparatus with pictures acquired by the left front camera and the right front camera;
when it is in the trailer mode and the driving state is a straight driving, the processor provides pictures acquired by the left front camera and the right front camera to the display apparatus;
when it is in the trailer mode and the driving state is turning or reversing, the processor provides the display apparatus with pictures acquired by the front camera on its turning side or a clipped and synthesized picture on a side opposite to the turning according to an angle between the central axis of the vehicle head and the central axis of the trailer;
during a process of clipping and synthesizing the pictures at a side opposite to the vehicle head turning direction, remove a pre-set width on a trailer shielding side from the pictures acquired by a front camera which is at a side opposite to the turning direction, and reserve pictures with a pre-set width part on the trailer side, which pictures acquired by a rear camera at side opposite to the turning direction, and the reserved pictures are placed at positions where the pictures are removed for synthesizing new pictures;
during a process of clipping and synthesizing the pictures at a side of the vehicle head turning, when the angle between central axis of the vehicle head and central axis of the trailer exceeds shooting angle of the front camera on the turning side, remove a pre-set width on turning side from the pictures acquired by the front camera at the turning direction, reserve pictures with a fixed width near the trailer, which pictures are acquired by the rear camera on the turning direction, and place the reserved pictures at positions where those pictures are removed, for synthesizing new pictures;
the fixed width is a width taken up by the trailer in the picture of the front camera on the turning side.

Further, the pre-set width is set according to an angle between a central axis of the vehicle head and a central axis of the trailer;
when the angle between the central axis of the vehicle head and the central axis of the trailer is 0-15 degrees, the pre-set width is 0;
when the angle between the central axis of the vehicle head and the central axis of the trailer is 15-30 degrees, the pre-set width is 1/3 of the width of the picture;
when the angle between the central axis of the vehicle head and the central axis of the trailer is 30-45 degrees, the pre-set width is 2/3 of the width of the picture;
when the angle between the central axis of the vehicle head and the central axis of the trailer is greater than or equal to 45 degrees, and the pre-set width is a full picture width.

The advantages of the present invention are:
by means of the multi-camera configuration, during turning, picture compensation is performed on an area in the rearview mirror that is blocked by the trailer, thereby effectively solving the problem of the trailer blocking viewing in a field of view; meanwhile, compared with an ordinary panoramic image spliced from images obtained by a fish-eye lens, a driver can more intuitively perceive the position at which a risk factor is located, thereby reducing thinking time and reducing accidents.

The front camera of the present invention has a Class II field of view that can meet the GB-15084 standard, has the ability to replace the traditional rearview mirror, and at the same time, combing with the rear camera on the trailer, achieves no blind area being monitored over the vehicle.

In the present invention, the field of view of the rear camera arranged on the trailer should include the trailer itself, so that the driver can intuitively perceive the position relationship between a dangerous unit and the trailer when compensating the picture, thereby enabling the driver to shorten the time for judging the content in the picture and achieve a quick response to a dangerous situation.

According to the present invention, by confirming the size of the compensation area required by the turning amount of the vehicle, it can match the compensation area with the blocked area, thereby enabling the driver to continuously obtain a more intuitive field of view of the blind area.

### Brief Desription of Drawings

FIG. 1 is a structural schematic diagram showing a display system for compensating a blind area of a field of view in a rearview mirror of a tractor-trailer according to an embodiment of the present invention;
FIG. 2 is a schematic diagram showing a field of view in a display system for compensating a blind area of a field of view in a rearview mirror of a tractor-trailer which are required to meet for a left front camera and a right front camera according to an embodiment of the present invention;
FIG. 3 is a schematic diagram showing a field of view in a display system for compensating a blind area of a field of view in a rearview mirror of a tractor-trailerwhich are required to meet by a left rear camera and a right rear camera according to an embodiment of the present invention;
FIG. 4 is a schematic diagram showing a camera distribution in a display system for compensating a blind area of a field of view in a rearview mirror of a tractor-trailer according to an embodiment of the present invention;
FIG. 5 is a schematic diagram showing each camera's field of view in a turning state of a tractor-trailer in a display system for compensating a blind area of a field of view in a rearview mirror of a tractor-trailer according to an embodiment of the present invention;
FIG. 6 is a schematic diagram showing an uncompensated picture provided by a display apparatus on a turning side in a turning state of a tractor-trailer in a display system for compensating a blind area of a field of view in a rearview mirror of a tractor-trailer according to an embodiment of the present invention;
FIG. 7 is a schematic diagram showing an uncompensated picture provided by a display apparatus on a side opposite to turning in a turning state of a tractor-trailer in a display system for compensating a blind area of a field of view in a rearview mirror of a tractor-trailer according to an embodiment of the present invention;
FIG. 8 is a schematic diagram showing a compensated picture provided by a display apparatus on a turning side in a turning state of a tractor-trailer in a display system for compensating a blind area of a field of view in a rearview mirror of a tractor-trailer according to an embodiment of the present invention;
FIG. 9 is a schematic diagram showing a compensated picture provided by a display apparatus on a side opposite to turning in a turning state of a tractor-trailer in a display system for compensating a blind area of a field of view in a rearview mirror of a tractor-trailer according to an embodiment of the present invention;
FIG. 10 is a schematic diagram showing the evolution of the tilt arrangement of the various parts of the camera in a preferred implementation, wherein FIGs. A-C are schematic side diagrams and FIGs. D and E are schematic top diagrams;
FIG. 11 is a schematic side diagram showing the angular relationship among the imaging lens 100, the image acquisition unit 200 and the camera body when photographing in a tilting downward direction;
FIG. 12 is a schematic top diagram of the relationship between the angle and displacement offset of the imaging lens 100 with respect to the main axis of the camera body when photographing in a tilting downward direction;
FIG. 13 is an image captured when the camera is slightly tilted downward and tilted toward the outside of the vehicle body, but the imaging lens 100 is arranged in parallel with the image acquisition unit 200;
FIG. 14 is an image captured when the camera is mounted on the vehicle with the camera body tilted downward and toward the rear of the vehicle, and the imaging lens 100 and the image acquisition unit 200 are both tilted at different angles in a reverse direction with respect to the main axis of the camera body (central axis of the lens barrel).
FIG. 15 is a schematic flow chart of a display method for compensating a blind area of a field of view in a rearview mirror of a tractor-trailer according to an embodiment of the present invention.

### Detailed Description of Embodiments

The technical solutions of the present invention will be described in more detail below with reference to the accompanying drawings, and the present invention includes, but is not limited to, the following embodiments.

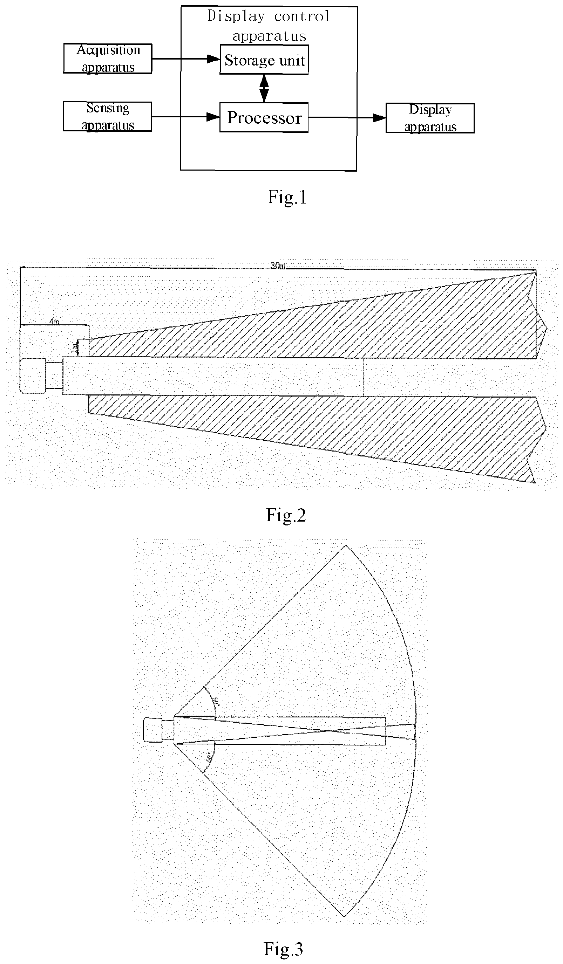

As shown in FIG. 1, a display system for compensating a blind area of a field of view in a rearview mirror of a tractor-trailer of the present invention includes an acquisition apparatus, a sensing apparatus, a display control apparatus, and a display apparatus.

As shown in FIGS. 2-4, the acquisition apparatus includes a left front camera, a right front camera, a left rear camera, and a right rear camera. A left front camera and a right front camera are respectively arranged on the left and right sides outside a cab of the tractor-trailer, wherein lenses of the left front camera and the right front camera face side and rear of its side where the lenses of the left front camera and the right front camera are located, so as to acquire real-time pictures at the rear-side of the both sides outside the cab of the tractor-trailer. The left front and right front cameras are used for acquiring Class II and IV fields of view as specified in GB-15084. A left rear camera and a right rear camera are respectively arranged on the left and right sides of one end of the tractor-trailer close to the cab, wherein lenses of the left rear camera and the right rear camera face side and rear of the side where the lenses of the left rear camera and the right rear camera are located, so as to acquire the rear-side real-time pictures of the both sides of the trailer of the tractor-trailer; mounting height and angle of the lens of the left rear camera and the right rear camera are close to mounting height and angle of the left front camera and the right front camera, the lens of the left rear camera and the right rear camera are kept consistent with a swinging angle of the trailer, and the acquired picture thereof should include the trailer body on a side where the camera is located.

The sensing apparatus is an angle sensing sensor arranged on the tractor-trailer and is used for acquiring an angle between a tractor-trailer head and a trailer in real time. In another embodiment, the sensing apparatus is realized by software integrated in the processing apparatus, and an angle between the vehicle head and the trailer is determined from the image by monitoring the real-time picture acquired by the acquisition apparatus, and analyzing the picture acquired by the camera arranged at the vehicle head and the picture acquired by the camera arranged at the trailer through various algorithms.

The display control apparatus is respectively connected to the acquisition apparatus and the sensing apparatus and includes a processor and a storage unit, wherein the processor and the storage unit are connected to each other; the processor is used for starting a corresponding acquisition apparatus on the trailer via angle data between the vehicle head and the trailer acquired by the sensing apparatus, and clipping and synthesizing the real-time picture acquired by the acquisition apparatus; and the storage unit is used for storing the picture acquired by the acquisition apparatus and the picture clipped by the processor.

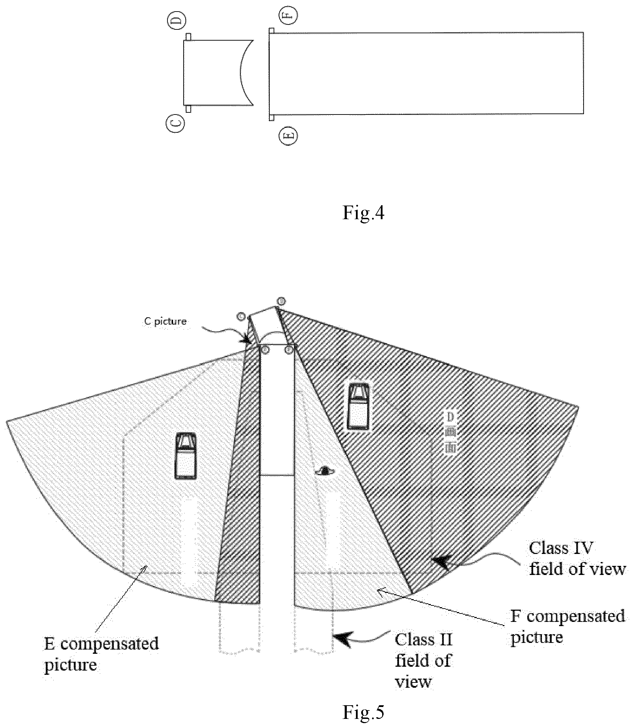

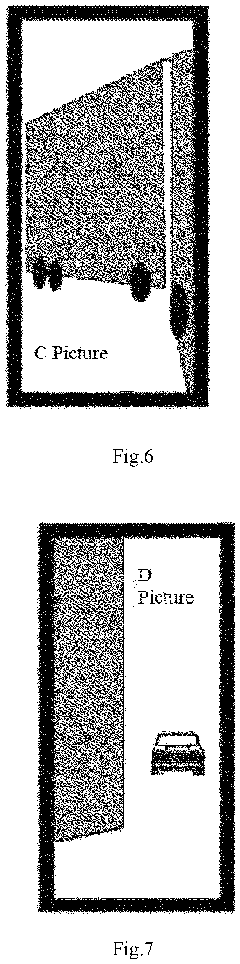

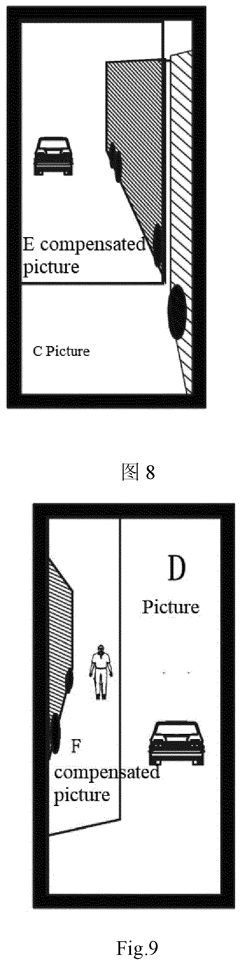

As shown in FIGS. 5-9, a picture acquired by a left front camera is named as a picture C, a picture acquired by a right front camera is named as a picture D, a picture acquired by a left rear camera is named as a picture E, and a picture acquired by a right rear camera is named as a picture F; for the synthesized image, when the vehicle turns to the left or reverses to the left as shown in FIG. 5, the picture observed by the driver on the left side is C shown in FIG. 6, and the picture observed by the driver on the right side is D shown in FIG. 7. Since a large area of the left-side field of view is filled by the trailer, and the right-side field of view has a large blind area, a certain extent of picture compensation needs to be performed on both sides. After the compensation, the picture on the left-side observed by driver is C + E shown in FIG. 8, and the picture on the right-side observed by driver is D + F shown in FIG. 9.

Specifically, the picture compensation scheme is as follows: firstly, the processor determines the width of the right compensated picture based on an angle by which the axis of a trailer deviates from the axis of a vehicle head; secondly, a picture with a corresponding width on the left side of the right rear camera picture close to the trailer side is acquired according to the width of the compensated picture; thirdly, a picture with a corresponding width on the left side of the right front camera picture which is blocked by the trailer side is clipped out according to the width of the compensated picture; finally, the right rear camera picture is filled to the clipped position in the right front camera picture to synthesize an image with blind area being compensated. For compensating the left picture, firstly, the processor determines a turning angle of the vehicle by an angle by which the axis of a trailer deviates from the axis of a vehicle head; secondly, when the turning angle exceeds a covering angle of the left front camera (the covering angle refers to an included angle between the edge of the field of view of the left front camera and a side wall of the vehicle head), a picture with a specific width on the right side and close to the trailer side of the picture acquired by the left rear camera is acquired according to the width of the compensated picture; thirdly, a picture with a specific width on the right side in the picture acquired by the left front camera is clipped out according to the width of the compensated picture; finally, the picture acquired by the left rear camera is filled to the position where the picture acquired by the left front camera is clipped out, to synthesize an image with blind area being compensated; if the turning angle does not reach the left front camera shooting angle, no compensation is needed, and only the picture acquired by the left front camera is displayed.

Similarly, if the vehicle turns to the right or reverses to the right, the pictures acquired by the front and rear cameras on both sides are synthesized, and the two rear cameras may be always on, or the two rear cameras may be started after determining that the vehicle turns to the right or reverses to the right. For compensating the left picture, firstly, the processor determines the width of the compensated picture by the angle by which the axis of a trailer deviates from the axis of a vehicle head; secondly, a picture with a corresponding width on the right side and close to the trailer side in the picture acquired by the left rear camera is acquired according to the width of the compensated picture; thirdly, a picture with a corresponding width on the right side and close to the trailer side in the picture acquired by the left front camera which is blocked by the trailer side is clipped out according to the width of the compensated picture; finally, the picture acquired by the left rear camera is filled to the position where the picture acquired by the left front camera is clipped out, to synthesize an image with blind area being compensated. For compensating the right picture, firstly, the processor determines a turning angle of the vehicle based on an angle by which the axis of a trailer deviates from the axis of a vehicle head; secondly, when the turning angle exceeds a coverage angle of the right front camera (the coverage angle refers to an included angle between the edge of the field of view of the right front camera and a side wall of the vehicle head), a picture with a specific width on the left side and close to the trailer side in the picture acquired by the right rear camera is obtained according to the width of the compensated picture; thirdly, a picture with a specific width on the left side in the picture acquired by the right front camera is clipped out according to the width of the compensated picture; finally, the picture acquired by the right rear camera is filled to the position where the picture acquired by the right front camera is clipped out, to synthesize an image with blind area being compensated; if the turning angle does not reach the right front camera shooting angle, no compensation is needed, and only the picture acquired by the right front camera is displayed.

In one embodiment, for picture compensation on a side opposite to/away from the turning direction of the tractor-trailer head, a set of a pre-drawn display block diagram X and a compensation block diagram Y for picture compensation is stored in a memory; the resolution of the display block diagram X corresponds to the resolution provided by a corresponding display apparatus; a compensation block diagram Yₐ is superimposed in the display block diagram X, wherein the compensation block diagram Yₐ is an element in the set of compensation block diagrams Y, the width of the compensation block diagram Yₐ is determined according to an angle by which the axis of a trailer deviates from the axis of a vehicle head. When the angle by which the axis of a trailer deviates from the axis of a vehicle head reaches a pre-set range, the compensation block diagram Yₐ with a corresponding width is automatically retrieved. The compensation block diagram Yₐ can be a rectangle or a special shape formulated according to the blind area in the specific tractor-trailer and trailer type; the compensation block diagram Y in the left field of view and the compensation block diagram Y in the right field of view are symmetrically designed, wherein the compensation block diagram Y in the left field of view is arranged on the right side of the display block diagram X in the left field of view, and the compensation block diagram Y in the right field of view is arranged on the left side of the display block diagram X in the right field of view.

When the angle by which the axis of a trailer deviates from the axis of a vehicle head reaches a pre-set range, the compensation block diagram Yₐ of a corresponding size is retrieved according to the angle by which the axis of a trailer deviates from the axis of a vehicle head. For the display block diagram X on a side needed to be compensated, the processor fills the picture acquired by the side front camera into the display block diagram X, and retrieves the pictures acquired by the side back camera to fill in a transition block diagram which is same as the display block diagram X, clips the picture corresponding to the position of the compensation block diagram Yₐ in the display block diagram X, projects the clipped picture to the position corresponding to the compensation block diagram Yₐ in the display block diagram X, covers the picture corresponding to the position of the compensation block diagram Yₐ in the picture acquired by the front camera, and generates a clipped and synthesized picture with a compensated field of view.

For the tractor-trailer turning side picture compensation, the memory also stores a pre-drawn set of compensation block diagrams Z for picture compensation; the compensation block diagram Zₐ is superimposed on the display block diagram X, the compensation block diagram Zₐ is an element in the set of compensation block diagrams Z. A specific width of the compensation block diagram Zₐ can be a fixed width, and can also be determined according to the angle by which the axis of a trailer deviates from the axis of a vehicle head. When the angle by which the axis of a trailer deviates from the axis of a vehicle head reaches a pre-set range, the compensation block diagram Zₐ with a corresponding width is automatically retrieved. The compensation block diagram Zₐ can be a rectangle or a special shape formulated according to a blind area in a specific tractor-trailer and trailer model; the compensation block diagram Z in the left field of view and the compensation block diagram Z in the right field of view are symmetrically designed, wherein the compensation block diagram Z is arranged on the left side of the display block diagram X in the left field of view and the compensation block diagram Z is arranged on the right side of the display block diagram X in the right field of view.

A corresponding compensation block diagram Zₐ is retrieved according to the angle by which the axis of a trailer deviates from the axis of a vehicle head, and the size (width) of the compensation block diagram Zₐ may be the width taken up by the trailer in the picture acquired by the front camera, or may be a corresponding size generated according to the angle by which the axis of a trailer deviates from the axis of a vehicle head. For the display block diagram X on a side needed to be compensated, the processor fills the picture acquired by the side front camera into the display block diagram X, and retrieves the pictures acquired by the back camera at this side to fill in a transition block diagram same as the display block diagram X. The processor clips the picture corresponding to the position of the compensation block diagram Zₐ in the display block diagram X, projects the clipped picture to the position corresponding to the compensation block diagram Zₐ in the display block diagram X, covers the picture corresponding to the position of the compensation block diagram Zₐ in the picture acquired by the front camera, and generates a clipped and synthesized picture with a compensated field of view.

The display apparatus is a display arranged in the cab, and the display apparatus is connected to the display control apparatus and is used for presenting a synthesized image output by the display control apparatus to the driver; the display apparatus includes a left display unit and a right display unit; the left display unit is used for displaying pictures acquired by the left front camera or pictures synthesized from the left front camera and the left rear camera; the right display unit is used for displaying pictures acquired by the right front camera or pictures synthesized from the right front camera and the right rear camera; the left and right display units may be integrated into one display to be displayed in sections, or may each be a separate display. In addition to being connected to the display control apparatus, the display apparatus may also be connected to a control bus of the vehicle or to other vehicle control units to present various status parameters of the vehicle to the driver. The display of the display apparatus may be integrated in a central control area or electronic rearview mirror, or may be provided as a display apparatus of the electronic rearview mirror on the A-pillars on both sides of the cab, respectively.

In one embodiment, during a process of straight driving of the tractor-trailer, the processor acquires the video pictures acquired by the left front camera and the right front camera in real time, and directly transmits the video pictures to the display apparatus without processing, and the display apparatus displays the rearview pictures showing the left and right sides of the tractor-trailer. When the tractor-trailer starts turning or reversing during driving, the sensing apparatus transmits the detected angle between central axis of the vehicle head and the central axis of the compartment to the processor in real time. The processor respectively clips the video pictures acquired by the front camera and the rear camera on both sides according to the angle between the central axis of the vehicle head and the central axis of the compartment to a size corresponding to the angle. During the clipping process, both the original video picture and the clipped video picture are cached via a storage unit. The processor finally synthesizes the clipped video pictures, and respectively delivers the synthesized video pictures of both sides to the areas corresponding to the display apparatus for display. Of course, a driver can manually control the display apparatus to display the vehicle Class II mirror display modes provided by the left front camera and the right front camera, and the manual control mode takes precedence over the displayed picture provided by the present invention.

Specifically, for picture compensation on a side opposite to a turning direction of a tractor-trailer, the left display unit and the right display unit are respectively two displays provided on the A pillars on the left and right sides of a cab, wherein the screen width of each display is 109.5 mm, and the resolution is 1920 * 720 pixel s; when the angle between the central axis of the vehicle head and the central axis of the tractor-trailer is 15 degrees, the displaying width of the compensated picture in the display is 36.5 mm; when the angle between the central axis of the vehicle head and the central axis of the tractor-trailer is 30 degrees, the displaying width of the compensated picture in the display is 73 mm; when the angle between the central axis of the vehicle head and the central axis of the tractor-trailer is 45 degrees, the display fully displays the compensated picture. For the picture compensation on the turning side of the tractor-trailer, when the angle between the central axis of the vehicle head and the central axis of the trailer is greater than the degree of field of view of the front camera, a picture with a fixed width in the display is compensated for displaying, wherein the fixed width is a fixed width of the picture taken up by the trailer in the picture acquired by the front camera; a compensation strategy of the same angle and width on a side opposite to the turning direction of the tractor-trailer may also be used.

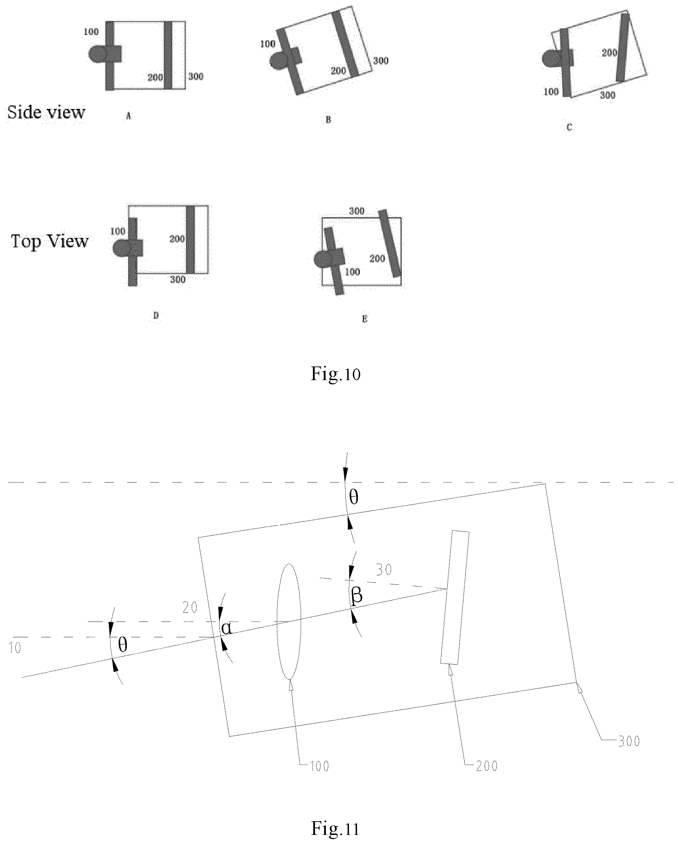

Preferably, one or more of the front left camera, the front right camera , the rear left camera and the rear right camera adopt a tilt-shift camera. As shown in FIG. 10, each of the tilt-shift cameras includes an imaging lens 100 and an image acquisition unit 200, wherein conventional configurations of a camera such as camera housing, control chip, etc. are not described in detail herein. As shown in FIG. 11, the imaging lens 100 and the image acquisition unit 200 are oppositely inclined with respect to the main axis of the camera body (the central axis of the lens barrel), wherein the inclination direction of the imaging lens 100 and the image acquisition unit 200 with respect to the main axis of the camera body is opposite to the inclination direction of the main axis of the camera body with respect to the horizontal direction, the inclination angles being respectively a second angle α and a third angle β, numeral 10 representing the horizontal direction, numeral 20 and 30 representing the normal lines of the imaging lens 100 and the image acquisition unit 200, respectively. Preferably, the third angle β at which the image acquisition unit 200 is inclined is larger than the second angle α at which the imaging lens 100 is inclined, and the second angle α and the third angle β are different.

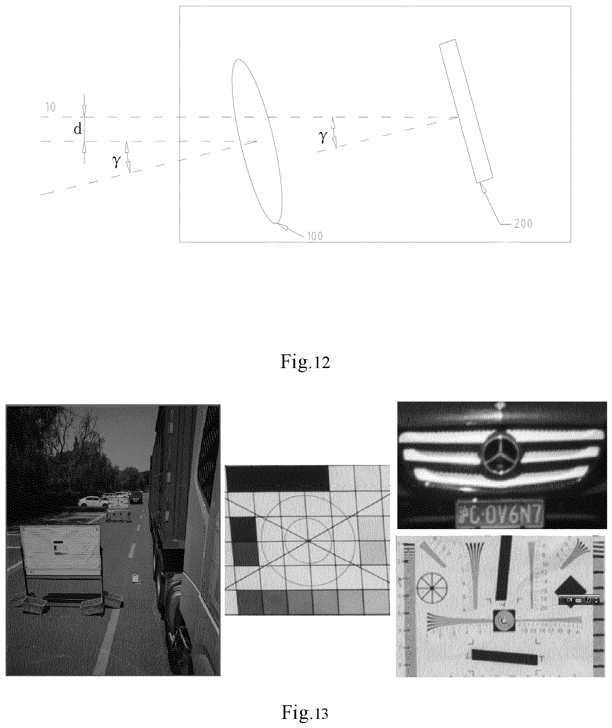

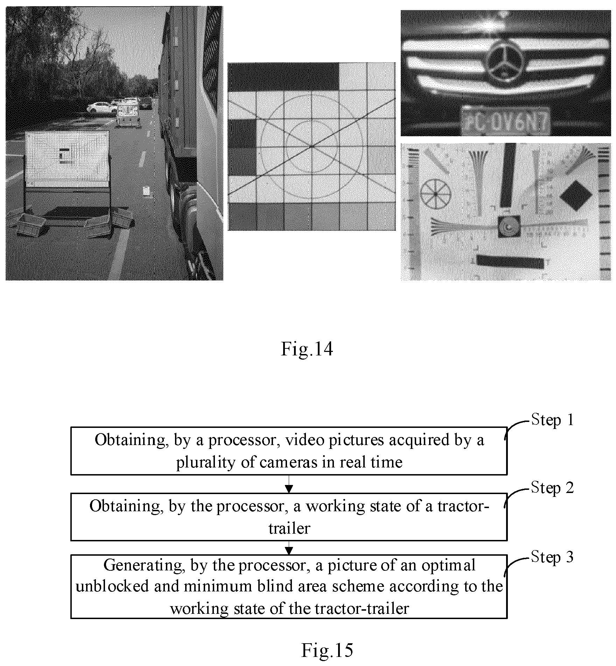

As shown in the top view of FIG. 10D, FIG. 10E and FIG. 12, the imaging lens 100 is offset (translated) with respect to the main axis of the camera body by an offset distance d, and the offset distance is substantially equal to tan8°-tan15° multiplied by a distance L between the imaging lens 100 and the image acquisition unit 200, i.e., with the center of the image acquisition unit as a reference, the center of the imaging lens is offset by a distance corresponding to approximately 8-15 degrees with respect to the main axis of the camera; the offset direction is a direction away from the vehicle body (such offset can also be achieved by the image acquisition unit 200 translating relative to the main axis of the camera body towards the vehicle body direction), and at the same time, both the imaging lens 100 and the image acquisition unit 200 rotate relative to the vertical direction center line thereof, and the rotation direction is a direction away from the vehicle body. More specifically, since the camera is shooting towards the rear of the vehicle body, both the imaging lens 100 and the image acquisition unit 200 rotate by a certain angle γ towards the outer side of the rear of the vehicle body about their respective center axes in the vertical direction, preferably, the angle is between 8-16 degrees, and more preferably the angle is positively related to the distance that the imaging lens 100 is offset relative to the main axis of the camera body. Preferably, the rotation angles of the imaging lens 100 and the image acquisition unit 200 are the same as each other, but it is not excluded that their rotation angles are slightly different from each other. As can be seen in FIGS. 13 and 14, images taken with a tilt-shift camera have minimal distortion.

As shown in FIG. 15, the present invention also provides a display method for compensating a blind area of a field of view in a rearview mirror of a tractor-trailer, which includes the steps of:
step 1: obtaining, by a processor, video pictures acquired by a plurality of cameras in real time;
the plurality of cameras includes a left front camera and a right front camera arranged outside the cab of the tractor-trailer on both left side and right side, and a left rear camera and a right rear camera arranged on left side and right side of one end of the trailer which end is adjacent to the cab; the left front camera and the right front camera are used for acquiring the Class II and Class IV fields of views specified in GB-15084; the left rear camera and the right rear camera are used for acquiring a field of view behind the tractor-trailer on both sides of the trailer with a horizontal angle of 50 degrees, and the field of view shall include a trailer body on a side where the camera is located.
step 2: obtaining, by the processor, a working state of the tractor-trailer;
the operating state of the tractor-trailer includes a trailer state and a driving state; the trailer state includes a trailer mode and a no-trailer mode; and the driving state includes straight driving and turning. Data connection with an automobile control bus is performed via a processor for detecting the trailer state, and whether a tractor-trailer is mounted is detected via the automobile control bus; the driving state is acquired by a sensing apparatus, wherein sensing apparatus adopts an angle sensing sensor arranged on the tractor-trailer, which can acquire an angle by which the axis of a trailer deviates from the axis of a vehicle head; at the same time, a software algorithm loaded by a processor can also be used for determining the angle by which the axis of a trailer deviates from the axis of a vehicle head through video pictures in each camera.
step 3: generating, by the processor, a picture of an optimal unblocked and minimum blind area scheme according to the working state of the tractor-trailer;
in step 3, the processor provides the display apparatus with various types of pictures based on the operating state of the tractor-trailer;
specifically, when the trailer state is in no-trailer mode, a tractor-trailer is not mounted with a trailer, the processor no longer monitors the angle by which the axis of a trailer deviates from the axis of a vehicle head; meanwhile, since the trailer is not mounted, the processor cannot acquire image signals acquired by the left rear camera and the right rear camera; at this time, the processor directly acquires the pictures in the left front camera and the right front camera and sends them to the display apparatus to provide a driver with pictures which are equivalent to those from a left and right main exterior mirrors and a left and right wide-angle exterior mirrors.

When the trailer state is in trailer mode, the tractor-trailer is mounted with a trailer, and meanwhile, the processor determines the driving state of the tractor-trailer via the sensing apparatus. When the tractor-trailer runs straightly or the sensing apparatus detects that the angle by which the axis of a trailer deviates from the axis of a vehicle head is less than 15 degrees, the processor determines that the driving trailer state is straight driving; and when the sensing apparatus detects that the angle by which the axis of a trailer deviates from the axis of a vehicle head is greater than or equal to 15 degrees, the processor determines that the tractor-trailer driving state is turning.

When the processor determines that the tractor-trailer driving state is straight driving, the processor directly acquires the images in the left front camera and the right front camera and sends them to the display apparatus to provide a driver with pictures which are equivalent to those from a left and right main exterior mirrors and a left and right wide-angle exterior mirrors.

When the processor determines that the tractor-trailer driving state is turning, the processor continuously detects an angle by which the axis of a trailer deviates from the axis of a vehicle head, and controls the picture displayed by the display apparatus according to the detected angle.

Specifically, taking a case where a left display unit video picture is generated during a tractor-trailer turning to the right or reversing to the right as an example, when it is detected that the angle by which the axis of a trailer deviates from the axis of a vehicle head is 15-30 degrees, firstly, a processor acquires video pictures acquired by a left front camera and a left rear camera, and transmits the video pictures to a storage unit for caching; secondly, the processor respectively clips the video pictures acquired by the left front camera and the left rear camera according to an angle by which the axis of a trailer deviates from the axis of a vehicle head: as for the video pictures acquired by the left front camera, clipping out a video picture of 1/3 width from it right, of which the right side is blocked by the trailer and form a blind area; as for video pictures acquired by the left rear camera, only reserving the video pictures of 1/3 width on its right of which the right side is close to the trailer, and caches the pictures reserved from clipping via the storage unit; thirdly, the video pictures reserved by the left rear camera are supplemented to the position where the left front camera clips out the video pictures, and are synthesized into a same video picture; finally, the video pictures synthesized by the left front camera and the left rear camera is transferred to a display system where the left video pictures are displayed.

When it is detected that the angle by which the axis of a trailer deviates from the axis of a vehicle head is 30-45 degrees, firstly, a processor acquires video pictures acquired by a left front camera and a left rear camera, and transmits the video pictures to a storage unit for caching; secondly, the processor respectively clips the video pictures acquired by the left front camera and the left rear camera according to an angle by which the axis of a trailer deviates from the axis of a vehicle head: as for the video pictures acquired by the left front camera, clipping out a video picture of 2/3 width from its right, of which the right side is blocked by the trailer and form a blind area, as for the video pictures acquired by the left rear camera, only reserving the video pictures of 2/3 width on its right, of which the right side is close to the trailer, and caches the pictures reserved from clipping via the storage unit; thirdly, the video pictures reserved by the left rear camera are supplemented to the position where the left front camera clips out the video pictures, and are synthesized into a same video picture; finally, the video pictures synthesized by the left front camera and the left rear camera are transferred to a display system where the left video pictures are displayed.

When it is detected that the angle by which the axis of a trailer deviates from the axis of a vehicle head is greater than or equal to 45 degrees, the processor directly acquires the images acquired by the left rear camera and sends them to the display system where the left video pictures are displayed.

However, there are two situations when generating a video picture for a right display unit during the process of turning a tractor-trailer to the right or reversing the tractor-trailer to the right; in the first situation, a compensated picture of a fixed size is used; firstly, when the processor determines that a turning angle of the vehicle exceeds a shooting angle of the right front camera according to the angle by which the axis of a trailer deviates from the axis of a vehicle head, the processor acquires video pictures acquired by the right front camera and the right rear camera, and transmits the video pictures to the storage unit for caching; secondly, the processor respectively clips the video pictures acquired by the right front camera and the right rear camera: as for video pictures acquired by the right front camera, clipling out the video pictures of a width on its right which is taken up by the trailer; as for the video pictures acquired by the right rear camera, only reserves the video pictures of the width on its right taken up by the traile, and caches the pictures reserved from clipping through the storage unit; thirdly, the video pictures reserved by the right rear camera are supplemented to a position where the right front camera clips out the video pictures, and the pictures are synthesized into a same video picture; finally, the video pictures synthesized from the front right camera and the rear right camera are transferred to the display system where the right video pictures are displayed. When the processor determines that the turning angle of the vehicle does not exceed the shooting angle of the right front camera by the angle by which the axis of a trailer deviates from the axis of a vehicle head, then the video pictures acquired by the right front camera are directly transmitted to the display system where the right video pictures are displayed, without compensation.

In the second situation, the compensation size is adapted to the turning angle, and the specific compensation scheme thereof corresponds to the left display unit video picture generation scheme.

As for a condition the tractor-trailer is turning left or reversing left, it corresponds to above mentioned condition.

In a preferred embodiment, each camera apparatus performs exposure adjustment usin g an automatic exposure adjustment method when performing video acquisition, and the adjustment steps are as follows:
step 1: acquiring data via a photosensitive sensor to generate a current photosensitive parameter;
step 2: adjusting an exposure mode through a relationship between the current photosensitive parameter and a first set value;
step 3: adjusting, in a fixed exposure mode, a counter state according to a comparison value between the current photosensitive parameter and a second set value;
step 4: adjusting the counter state and the exposure mode according to the count value and the third set value.

Specifically, firstly, the range of the current photosensitive parameter mapping is determined; the current photosensitive mean value is calculated using the data acquired by the photosensitive sensor by the control unit, and the current mapped ADC value through analog-to-digital conversion/digital-to-analog conversion is determined.

The first set value is used for determining with the current mapped ADC value whether image acquisition should be performed in automatic exposure mode or fixed exposure mode. It should adopt an automatic exposure mode in a default state; if the proportion of the ADC value of the current mapping in the mapping range is less than a first set value, a fixed exposure mode is started; if the ratio of the ADC value of the current mapping in the map range is greater than or equal to the first set value, the automatic exposure mode is maintained. In general, the first set value is 28%-33%, and since the brightness adjustment is performed by using the middle gray level as a standard, when the proportion of the mapped ADC value in the mapping range is less than 33%, the picture displayed in the automatic exposure state is relatively dark. In the fixed exposure mode, an exposure time is generally 9 ms to 20 ms.

In a case where the fixed exposure mode has been started, the relationship between the ADC value and the second set value is continuously monitored, and if the proportion of the ADC value in the mapping range is greater than or equal to the second set value, the count value of the counter is increased by one, and if the proportion of the ADC value in the mapping range is less than the second set value, the count value of the counter is cleared.

The count value is compared with the third set value, if the count value reaches the third set value, the counter is cleared, the fixed exposure mode is closed, and the automatic exposure mode is started; if the count value does not reach the third set value, no operation is performed and the above operation is repeated.

If the vehicle is outdoors, an automatic exposure mode is automatically started when the vehicle is started; when the vehicle enters a dark environment from a bright ground, the light intensity acquired by the photosensitive sensor undergoes analog-to-digital conversion and digital-to-analog conversion, and the current ADC value is 10% of the total mapping range, which is lower than a first set value, wherein the value range of the first set value is 28%-33%, and a value of 28%, 30% or 33% can be adopted. The first set value refers to the ratio of the current ADC value to the mapping range; the control unit sends a command to the image acquisition apparatus to open a fixed exposure mode and close the automatic exposure mode; the exposure time is 11 ms, and a value of the exposure time of 9 ms-20 ms can be adopted.

When a vehicle passes through continuous tunnels from a bright place with short tunnel intervals and it is relatively dark in the tunnels, when the vehicle enters the dark tunnel, the current ADC value acquired by the photosensitive sensor is 9% of the mapping range, which is lower than the first set value, the control unit sends a command to the image acquisition apparatus to turn on the fixed exposure mode and turn off the automatic exposure mode, with the exposure time being 11 ms; when the vehicle enters another tunnel from one tunnel, the vehicle is still in a fixed exposure mode-on state, and the current three consecutive ADC values acquired by the photosensitive sensor respectively account for 61%, 67% and 33% of the mapping range, wherein the first two proportions are higher than 60% of the second set value, the counter continues to count, but still fails to reach the 3 times specified by the third set value, and the third proportion is lower than 60% of the second set value, the counter is cleared, and is still in a fixed exposure mode.

When the vehicle returns to a bright ground from a dark environment, the vehicle is still in a fixed exposure mode-on state; the current ADC value acquired by the photosensitive sensor is 61% of the mapping range, which is higher than the second set value of 60%; the value range of the second set value is 54%-60%, and the values of 55%, 58% and 60% may be adopted; a counter counts; when the vehicle returns to the bright ground for a period of time, i.e., the counting value of the counter reaches the third set value of 3, wherein the third set value can adopt values of 2, 3 and 4; the counter clears; and the control unit sends a command to the image acquisition apparatus to turn off the fixed exposure mode, and turn on the automatic exposure mode.

The brightness of the middle section of two similar tunnels is higher, and because of the relationship between tunnels, the brightness when entering the tunnel and when leaving the tunnel is an excessive brightness, where the brightness will be lower than the brightness of outside the tunnel, and higher than the brightness inside the tunnel, and the proportion of the ADC value of the brightness map acquired in the mapping range is 38%-50%; if the second set value is set to 38%, and the proportion of the ADC value of the map corresponding to the continuously acquired brightness in the mapping range is 28%, 30%, 40%, 61%, 67%, 44%, 30% and 27%, respectively, at this time, the camera will start the automatic exposure mode within a short time after leaving the tunnel, and then switch to the fixed exposure mode.

When the vehicle with an automatic exposure mode being recovered passes through a dark tunnel, the current ADC value is 33% of the mapping range and is higher than 30%, and the control unit sends a command to the image acquisition apparatus to use the automatic exposure mode.

The present invention is not limited to the above embodiments, and a person skilled in the art can implement the present invention in other various embodiments according to the disclosure of the embodiments and the drawings, and therefore, all the designs and ideas of the present invention, which are made by some simple changes or modifications, fall within the protection scope of the present invention.

## Claims

1. A display system for compensating a blind area of a field of view in a rearview mirror of a tractor-trailer, wherein the display system comprises an acquisition apparatus, a sensing apparatus, a display control apparatus, and a display apparatus;
the acquisition apparatus comprises a left front camera, a right front camera, a left rear camera, and a right rear camera; the left front camera and the right front camera are respectively arranged on the left side and right side out of the cab, and the left rear camera and the right rear camera are respectively arranged on the left side and right side of the trailer;
the sensing apparatus is an angle sensing sensor arranged on the tractor-trailer, and the angle sensing sensor is used for acquiring an angle by which an axis of a trailer deviates from an axis of a vehicle head;
the display control apparatus is connected to the acquisition apparatus and the sensing apparatus, and comprises a processor, wherein the processor is used for obtaining the angle by which the axis of a trailer deviates from the axis of a vehicle head via the sensing apparatus, and directly transmitting pictures acquired by the acquisition apparatus to the display apparatus and/or transmitting pictures to the display apparatus after such pictures were clipped and synthesized;
the display apparatus is a display arranged in the cab, and the display apparatus is connected to the display control apparatus to display to the driver an image outputted by the display control apparatus.

2. The display system according to claim 1, wherein the field of view of the pictures acquired by the left front camera and the right front camera comply with the Class II and/or Class IV fields of views ruled by Standard; the pictures acquired by the left rear camera and the right rear camera comprise image of trailer body on a side where the camera is located.

3. The display system according to claim 1, wherein the display apparatus comprises a left display unit and a right display unit; the left display unit is used for displaying pictures acquired by the left front camera or pictures synthesized from pictures acquired by the left front camera and the left rear camera; the right display unit is used for displaying pictures acquired by the right front camera or pictures synthesized from pictures acquired by the right front camera and the right rear camera.

4. The display system according to claim 1, wherein the processor, when clipping and synthesizing pictures, removes the pictures on a trailer blocking side with a pre-set width or a fixed width which pictures acquired by the front camera on a side that vehicle head is turning opposite to or towards, reserves the pictures with a pre-set width or a fixed width on a trailer side which pictures acquired by the rear camera on a side that vehicle head is turning opposite to or towards, and places the reserved pictures at positions where the pictures are removed for synthesizing new pictures.

5. The display system according to claim 4, wherein when the angle sensing sensor detects that the angle between the central axis of the vehicle head and the central axis of the trailer exceeds an shooting angle of the front camera on a turning side, the processor uses the pictures with fixed width for clipping and synthesizing;
the fixed width is a width taken up by the trailer in the picture of the front camera on the turning side.

6. The display system according to claim 1, wherein the display control apparatus comprises a storage unit storing a pre-drawn display block diagram X for displaying on the display apparatus, a set of compensation block diagrams Y and a set of compensation block diagrams Z for picture compensation; the processor performs calculation and determination according to the sensing of the sensing apparatus, and retrieves a compensation block diagram Yₐ complying with a pre-set width from the set of pre-stored compensation block diagrams Y and a compensation block diagram Zₐ with a fixed width or a pre-set width from the set of compensation block diagrams Z;
the processor clips pictures acquired by the rear camera at a side opposite to the turning direction, by a pre-set width on the trailer side, and projects the processed pictures into the retrieved compensation block diagram Ya;
the processor clips pictures acquired by the rear camera at a side in the turning direction , by a fixed width on the trailer side, and projects the processed picture into the retrieved compensation block diagram Zₐ.

7. The display system according to any one of claims 4 or 6, wherein the pre-set width is set according to an angle between a central axis of the vehicle head and a central axis of the trailer;
when the angle between the central axis of the vehicle head and the central axis of the trailer is 0-15 degrees, the pre-set width is 0;
when the angle between the central axis of the vehicle head and the central axis of the trailer is 15-30 degrees, the pre-set width is 1/3 of the width of the picture;
when the angle between the central axis of the vehicle head and the central axis of the trailer is 30-45 degrees, the pre-set width is 2/3 of the width of the picture;
when the angle between the central axis of the vehicle head and the central axis of the trailer is greater than or equal to 45 degrees, and the pre-set width is a full picture width.

8. The display system according to claim 1, wherein one or more of the front left camera, the front right camera, the rear left camera and the rear right camera adopt tilt-shift cameras, wherein the tilt-shift cameras comprise a camera body, an image acquisition unit and an imaging lens; the imaging lens and the image acquisition unit are respectively mounted at a front end and a rear end of the camera body, and the camera body has a first angle θ inclined toward a first direction with respect to a reference direction, the image acquisition unit and the imaging lens respectively have a second angle α and a third angle β inclined with respect to a main axis of the camera body in a direction opposite to an inclination direction of the camera body, the second angle α and the third angle β are different from each other, preferably, the second angle α is larger than the third angle β so that a plane where the image acquisition unit is located and a plane where the imaging len is located intersect with each other and form an acute angle.

9. A display method for compensating a blind area of a field of view in a rearview mirror of a tractor-trailer based on the display system according to one of claims 1-8, wherein the display method comprises the steps of:
step 1: obtaining, by a processor, video pictures acquired by a plurality of cameras in real time;
step 2: obtaining, by the processor, a working state of the tractor-trailer;
step 3: generating, by the processor, a picture of an optimal unblocked and minimum blind area scheme according to the working state of the tractor-trailer;
the working state comprises a trailer state and a driving state; the trailer state comprises a trailer mode and a no-trailer mode; and the driving state includes straight driving, turning and reversing;
the plurality of cameras comprises a left front camera, a right front camera, a left rear camera and a right rear camera; the left front camera and the right front camera are respectively arranged on the left side and right side outside the cab, and the left rear camera and the right rear camera are respectively arranged on the left side and right side of the trailer.

10. The display method according to claim 9, wherein in step 3, in the no-trailer mode, the processor provides a picture for a display apparatus;
when it is in the trailer mode and the driving state is a straight driving, the processor provides pictures acquired by the left front camera and the right front camera to the display apparatus;
when it is in the trailer mode and the driving state is turning or reversing, the processor provides the display apparatus with pictures acquired by the front camera on its turning side or a clipped and synthesized picture on a side opposite to the turning according to an angle between the central axis of the vehicle head and the central axis of the trailer;
during a process of clipping and synthesizing the pictures at a side opposite to the vehicle head turning direction, remove a pre-set width on a trailer shielding side from the pictures acquired by a front camera which is at a side opposite to the turning direction, and reserve pictures with a pre-set width part on the trailer side, which pictures acquired by a rear camera at side opposite to the turning direction, and the reserved pictures are placed at positions where the pictures are removed for synthesizing new pictures;
during a process of clipping and synthesizing the pictures at a side of the vehicle head turning, when the angle between central axis of the vehicle head and central axis of the trailer exceeds shooting angle of the front camera on the turning side, remove a pre-set width on turning side from the pictures acquired by the front camera at the turning direction, reserve pictures with a fixed width near the trailer, which pictures are acquired by the rear camera on the turning direction, and place the reserved pictures at positions where those pictures are removed, for synthesizing new pictures;
the fixed width is a width taken up by the trailer in the picture of the front camera on the turning side.

11. The display method according to claim 10, wherein the pre-set width is set according to an angle between a central axis of the vehicle head and a central axis of the trailer;
when the angle between the central axis of the vehicle head and the central axis of the trailer is 0-15 degrees, the pre-set width is 0; when the angle between the central axis of the vehicle head and the central axis of the trailer is 15-30 degrees, the pre-set width is 1/3 of the width of the picture; when the angle between the central axis of the vehicle head and the central axis of the trailer is 30-45 degrees, the pre-set width is 2/3 of the width of the picture; when the angle between the central axis of the vehicle head and the central axis of the trailer is greater than or equal to 45 degrees, the pre-set width is a full picture width.
